# EUROPÄISCHE PATENTSCHRIFT

(11) **EP 2 976 616 B1**
(45) Veröffentlichungstag und Bekanntmachung des Hinweises auf die Patenterteilung: **29.04.2020**
(21) Anmeldenummer: 14712282.4
(22) Anmeldetag: 21.03.2014
(51) Int. Cl.: G01M 17/007, G01M 17/00

(54) **SYSTEM ZUM ERZEUGEN VON KOLLISIONEN ZWISCHEN EINEM FAHRZEUG UND EINEM TESTOBJEKT**
SYSTEM FOR CREATING COLLISIONS BETWEEN A VEHICLE AND A TEST OBJECT
SYSTÈME POUR CRÉER DES COLLISIONS ENTRE UN VÉHICULE ET UN OBJECT DE TEST

(30) Priorität: 22.03.2013 DE 102013205152; 30.07.2013 DE 102013214936
(43) Veröffentlichungstag der Anmeldung: 27.01.2016
(73) Patentinhaber: 4Activesystems GmbH, 8772 Traboch (AT)
(72) Erfinder: FRITZ, Martin, A-8723 Kobenz (AT); HAFELLNER, Reinhard, A-8724 Spielberg (AT)
(74) Vertreter: Dilg, Haeusler, Schindelmann Patentanwaltsgesellschaft mbH
(86) Internationale Anmeldenummer: PCT/EP2014/055773
(87) Internationale Veröffentlichungsnummer: WO 2014/147253

(56) Entgegenhaltungen:
- EP-A1- 1 010 919
- WO-A1-2009/103518
- WO-A1-2012/156484
- WO-A2-2006/078890
- DE-A1-102011 012 542
- Aspecss: "Newsletter 2", , 1. August 2012 (2012-08-01), Seiten 1-4, XP055157263, Gefunden im Internet: URL:http://www.aspecss-project.eu/userdata /file/Public%20deliverables/ASPECSS-D4.5-F INAL-Newsletter%202%20issue%201-Aug-2012.p df [gefunden am 2014-12-08]

## Beschreibung

### Technisches Gebiet

Die vorliegende Erfindung betrifft ein System zum Erzeugen von Kollisionen zwischen einem Kollisionskörper, z.B. einem Fahrzeug, und einem Testobjekt und ein Verfahren zum Erzeugen von Kollisionen zwischen einem Kollisionskörper und einem Testobjekt.

### Hintergrund der Erfindung

Zum Testen von modernen Fahrzeugsystemen, wie beispielsweise diverser Assistenzsysteme für Kraftfahrzeuge, werden Kollisionen oder kollisionsnahe Situationen zwischen dem zu testenden Fahrzeug und einem Testobjekt herbeigeführt.

Für eine Kollision zwischen einem Fahrzeug und einem Testobjekt wird beispielsweise das Fahrzeug oder das Testobjekt an einer bestimmten Position ruhend angeordnet und der Kollisionspartner auf eine bestimmte Geschwindigkeit beschleunigt. Um eine realitätsnahe Kollisionssituation herbeizuführen, wie beispielsweise eine Kollision zweier Fahrzeuge oder eines Fahrzeugs mit einer Person im Straßenverkehr, wird das Fahrzeug wie auch das Testobjekt in Bewegung zu versetzt, um eine Kollision zu erzeugen. Dabei können insbesondere Fahrerassistenzsysteme realitätsnah getestet werden.

DE 10 2008 030 208 A1 offenbart eine Vorrichtung und ein Verfahren zum Erzeugen von Kollisionssituationen oder kollisionsnahen Situationen zwischen einem Testfahrzeug und einem Kollisionsobjekt. Das Testfahrzeug und das Kollisionsobjekt werden über eine Koppeleinrichtung, wie beispielsweise ein Seil, mechanische gekoppelt und aufeinander zubewegt, um eine Kollision zu erzeugen.

DE 10 2011 012 542 A1 offenbart eine Testvorrichtung zur Simulierung bzw. zur Nachbildung von Fahrsituationen, insbesondere kollisionsnah und kollisionsbehafteter Fahrsituationen, zwischen einem Versuchsfahrzeug und einem Zielobjekt. Das Zielobjekt ist mit einem Führungsseil verbunden und wird entlang des Führungsseils bewegt. Das Führungsseil ist bodennah zwischen zwei Befestigungsvorrichtungen vorgespannt. Das Versuchsfahrzeug kann sich in Richtung des Zielobjekts bewegen und im Zeitpunkt einer Kollision zwischen dem Versuchsfahrzeug und dem Zielobjekt bei Überschreiten eines bestimmten Belastungsschwellwerts das Zielobjekt von dem Führungsseil entkoppeln.

### Darstellung der Erfindung

Es ist eine Aufgabe der vorliegenden Erfindung, ein System zum Erzeugen einer Kollision zwischen einem Testkörper und einem Testobjekt bereitzustellen, wobei die Kollision eine reale Verkehrssituation realitätsnah nachbildet.

Diese Aufgabe wird mittels eines Systems zum Erzeugen von Kollisionen oder kollisionsnahen Situationen zwischen einem Testkörper und einem Testobjekt gemäß dem unabhängigen Anspruch gelöst.

Gemäß eines ersten Aspekts der vorliegenden Erfindung wird ein System zum Erzeugen von Kollision oder kollisionsnahen Situationen zwischen einem Kollisionskörper, insbesondere einem Fahrzeug, und einem Testobjekt beschrieben. Das System weist eine Befestigungsplatte mit einem Koppelmechanismus auf, wobei mittels des Koppelmechanismus das Testobjekt lösbar auf der Befestigungsplatte koppelbar ist. Ferner weist das System einen Antriebsriemen auf, welcher an der Befestigungsplatte befestigt ist. Das System weist ferner eine Antriebseinheit mit einem Antriebskörper zum Antreiben des Antriebsriemens auf, wobei die Antriebseinheit, der Antriebsriemen und die Befestigungsplatte auf einem Boden derart platzierbar sind, dass der Antriebskörper den Antriebsriemen und die Befestigungsplatte entlang dem Boden bewegt.

In einer weiter unten detaillierter beschriebenen beispielhaften Ausführungsform ist der Koppelmechanismus derart steuerbar, dass das Testobjekt an der Befestigungsplatte gekoppelt ist, um ab einem vorbestimmten Betriebspunkt vor einer Kollision zwischen dem Kollisionskörper und dem Testobjekt von der Befestigungsplatte entkoppelt ist, so dass bei der Kollision zwischen dem Kollisionskörper und dem Testobjekt das Testobjekt, insbesondere mechanisch, entkoppelt von der Befestigungsplatte ist.

Gemäß einem weiteren Aspekt der vorliegenden Erfindung wird ein Verfahren zum Erzeugen von Kollisionen oder kollisionsnahen Situationen zwischen einem Kollisionskörper und einem Testobjekt beschrieben. Gemäß dem Verfahren werden eine Antriebseinheit, ein Antriebsriemen und eine Befestigungsplatte auf einem Boden derart platziert, dass der Antriebskörper den Antriebsriemen und die Befestigungsplatte entlang dem Boden bewegt. Der Antriebsriemen ist an der Befestigungsplatte befestigt. Ferner wird ein Koppelmechanismus derart gesteuert, dass das Testobjekt an der Befestigungsplatte gekoppelt ist und ab einem vorbestimmten Betriebspunkt vor einer Kollision zwischen dem Kollisionskörper und dem Testobjekt von der Befestigungsplatte entkoppelt wird, so dass bei der Kollision zwischen dem Kollisionskörper und dem Testobjekt das Testobjekt (insbesondere mechanisch) entkoppelt von der Befestigungsplatte ist.

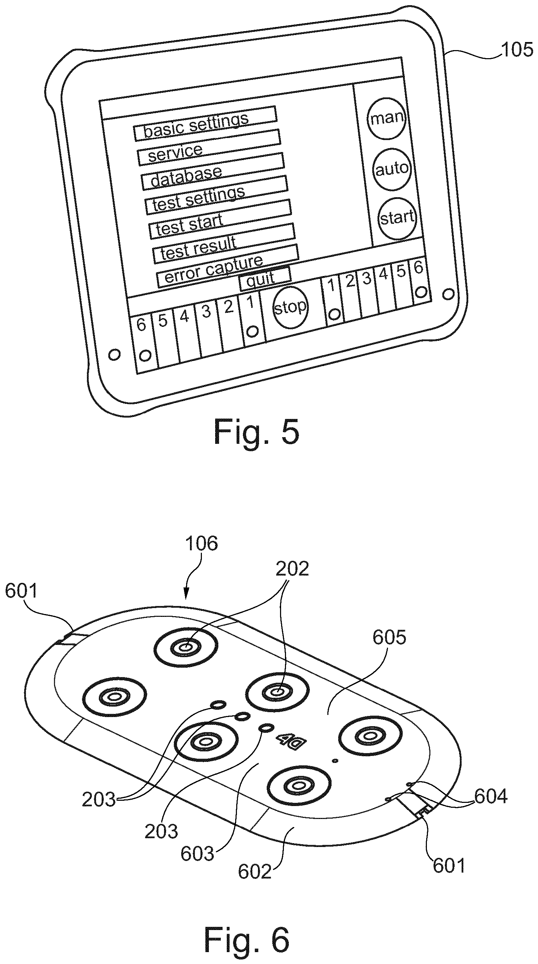

Die Befestigungsplatte kann auf dem Boden aufliegen und mittels des Antriebsriemens entlang des Bodens bewegt werden, so dass die Befestigungsplatte entlang des Bodens gleitet. In einer beispielhaften Ausführungsform kann die Befestigungsplatte Rollen aufweisen, so dass die Befestigungsplatte entlang des Bodens entlang rollt. Ferner ist die Befestigungsplatte eben, flach und mit einer Anfahrrampe ausgebildet, sodass der Testkörper über die Befestigungsplatte fahren und darauf bremsen kann, ohne dass Beschädigungen an der Befestigungsplatte oder dem Testkörper entstehen. Mit anderen Worten weist die Befestigungsplatte einen Randbereich mit einer ersten Dicke und einen Mittelbereich, welcher zumindest teilweise von dem Randbereich umgeben wird, mit einer zweiten Dicke auf, wobei die erste Dicke kleiner ist als die zweite Dicke. In dem dickeren Mittelbereich kann somit Einbauraum für bestimmte Geräte bzw. Funktionselemente, wie zum Beispiel die unten beschriebenen Magneten, geschaffen werden. Die zweite Dicke weist ungefähr 20 mm bis 30 mm auf, insbesondere ungefähr 25mm auf. Zwischen dem Randbereich und dem Mittelbereich verläuft eine rampenähnliche Fläche bzw. eine abgeflachte Phase (siehe Fig.6), welche eine Steigung gegenüber dem Boden von ungefähr 10° aufweist. Diese flache Ausbildung der Befestigungsplatte verhindert ungewollte Reflexionen und Fehlmessungen der Messsensoren, beispielsweise Fehlmessungen der zu testenden Fahrerassistenzsysteme. Die Befestigungsplatte kann eine gewisse Mindestabmessung bis -masse benötigen, um dem Testkörper eine Stabilität gegen zum Beispiel Windböen und Beschleunigungskräfte zu geben. Die Befestigungsplatte weist beispielsweise ungefähr 10 kg bis ungefähr 15 kg (Kilogramm) auf.

Ferner weist die Befestigungsplatte eine Auflagefläche auf, mit welcher die Befestigungsplatte auf dem Boden aufliegt. Die Auflagefläche weist einen Meter Länge und ungefähr einen halben Meter Breite auf. Somit weist die Befestigungsplatte die zumindest eine Schrittlänge auf, so dass ein Testdummy als Testobjekt mit ausgespreizten Beinen auf der Befestigungsplatte fixiert werden kann.

Der Testkörper kann beispielsweise ein Fahrzeug darstellen, wie beispielsweise ein Personenkraftfahrzeug, ein Lastkraftfahrzeug oder einen Bus. Ferner kann der Testkörper ein Fahrrad und/oder einen Motorrad darstellen.

Das Testobjekt ist beispielsweise ein Dummyobjekt, welches eine Person, einen Fahrradfahrer und/oder einen Motorradfahrer nachbildet. Ferner kann das Testobjekt ein weiteres Fahrzeug darstellen, so dass mittels des Systems eine Kollision zweier Fahrzeuge simuliert und nachgestellt werden kann. Das Testobjekt kann beispielsweise auch ein Tier, ein Verkehrszeichen, einen Pfahl oder einen Baum simulieren.

Die Befestigungsplatte weist einen Koppelmechanismus auf, um das Testobjekt auf der Befestigungsplatte zu koppeln. Der Koppelmechanismus ist beispielsweise ein mechanischer Koppelmechanismus. Beispielsweise kann der Koppelmechanismus ein Eingriffselement, wie z.B. einen ausfahrbaren Haken, aufweisen, welches in eine entsprechende Befestigungsvorrichtung (z.B. eine Aufnahmeöse) an dem Testobjekt eingreift, um das Testobjekt an der Befestigungsplatte zu koppeln. Das Eingriffselement des Koppelmechanismus kann beispielsweise in eine Auslöseposition bewegt werden, so dass sich das Eingriffselement von der Befestigungsvorrichtung des Testobjekts lösen kann, um das Testobjekt freizugeben und von der Befestigungsplatte zu entkoppeln.

Ferner kann der Koppelmechanismus ein magnetischer Koppelmechanismus sein und beispielsweise Permanentmagneten und Elektromagneten, wie weiter unter im Detail beschrieben, aufweisen. Der Antriebsriemen ist fest und unlösbar an der Befestigungsplatte befestigt. Der Antriebsriemen liegt lose mit einer Auflagefläche auf dem Boden auf, ohne dass der Antriebsriemen vorgespannt werden muss. Die Breite der Auflagefläche ist um ein Vielfaches größer, z.B. mindestens fünf Mal so groß, als die Randfläche, d.h. die Höhe bzw. die Dicke, des Antriebsriemens. Die Breite der Auflagefläche des Antriebsriemens definiert eine Erstreckungsrichtung des Antriebsriemens senkrecht zu einer Längsrichtung des Antriebsriemens. Die Antriebskraft, welche den Antriebsriemen antreibt, wirkt im Wesentlichen entlang der Längsrichtung.

Der Antriebsriemen ist aufgrund der geringen Höhe um die Längsrichtung des Antriebsreimens biegeweich bzw. verdrillbar. Beispielsweise liegt die Auflagefläche in einem Auflagebereich flach auf dem Boden auf und an einem Umlenkbereich des Antriebsriemens, z.B. an dem Antriebskörper, ist der Antriebsriemen um ca. 90° um die Längsrichtung verdrillt.

Der Antriebsriemen ist ferner aufgrund der großen Breite um eine Normale der Auflagefläche biegesteif, um eine gute Führung der Befestigungsplatte zu erzeugen.

Der Antriebsriemen ist in Längsrichtung nahezu unelastisch, um eine Relativbewegung während der Beschleunigung und des Bewegens der Befestigungsplatte infolge Dehnung zu reduzieren. Als Antriebsriemen kann im Folgenden auch eine Antriebskette verstanden werden. Der Antriebsriemen kann ferner beispielsweise, wie weiter unten im Detail beschrieben, einen Zahnriemen darstellen. Der Antriebsriemen ist ungespannt auf den Boden auflegbar und derart flach bzw. schmal ausbildet, dass der Testkörper über den Antriebsriemen fahren kann, ohne dass der Antriebsriemen, die Befestigungsplatte oder der Testkörper beschädigt werden.
Die Antriebseinheit weist beispielsweise als Antriebskörper eine antreibbare Antriebsrolle, z.B. eine Winde oder Rolle, auf, welche über einen Reibschluss oder einen Formschluss mit dem Antriebsriemen gekoppelt ist.

Die Antriebseinheit weist ferner ein Anpresselement auf, welches den Antriebsriemen an die Antriebsrolle derart anpresst, dass bei Reibschluss ein minimaler Schlupf oder im Falle des Formschlusses kein Zahnsprung durch die nicht vorhandene Vorspannung im Antriebsriemen entsteht. Mittels Antreibens der Antriebsrolle kann der Antriebsriemen und somit ebenfalls die Befestigungsplatte entlang des Bodens bewegt werden.

Die Antriebseinheit kann ferner einen Motor zum Antreiben des Antriebskörpers aufweisen. Der Motor kann beispielsweise ein elektrisch betriebener Motor oder ein Verbrennungsmotor sein.

Gemäß einer weiteren beispielhaften Ausführungsform ist der Koppelmechanismus derart ausgebildet, dass das Testobjekt an der Befestigungsplatte lastabhängig gekoppelt ist, so dass bei Überschreiten einer mechanischen Beanspruchung infolge eines Aufpralls, d.h. bei Überschreiten einer vorbestimmten Aufprallkraft/Aufprallstoß, zwischen dem Testobjekt und dem Kollisionskörper das Testobjekt von der Befestigungsplatte entkoppelt ist. Mit anderen Worten bedeutet der Begriff "lastabhängige" Kopplung, dass bei einem Aufprallstoß mit einer gewünschten Intensität das Testobjekt von der Befestigungsplatte entkoppelt wird. Der Aufprallstoß, bei welcher der Kopplungsmechanismus das Testobjekt von der Befestigungsplatte entkoppelt, ist derart gewählt, dass größere Defekte an dem Testobjekt, dem Kollisionskörper oder dem Koppelmechanismus vermieden werden können. Beispielsweise kann ein lastabhängiger Koppelmechanismus mechanisch das Testobjekt an die Befestigungsplatte koppeln, beispielsweise indem eine Schnapp-Haken-Verbindung, bzw. eine formschlüssige Verbindung, oder eine kraftschlüssige Verbindung, beispielsweise eine Presspassung, verwendet werden.

Der Koppelmechanismus ist beispielsweise, wie oben erläutert, insbesondere derart steuerbar, dass während der Beschleunigung und der Bewegung des Testobjekts dieses auf der Befestigungsplatte befestigt und gekoppelt ist. Zu dem Betriebspunkt kurz vor der Kollision löst der Koppelmechanismus das Testobjekt von der Befestigungsplatte, so dass das Testobjekt bei der Kollision mit dem Kollisionskörper mechanisch entkoppelt von der Befestigungsplatte vorliegt. Mechanisch entkoppelt bedeutet, dass keine Koppelelemente des Testkörpers und des Koppelmechanismus bei der Kollision mechanisch im Eingriff stehen oder dass keine bzw. kaum Haltekräfte, z.B. aufgrund von magnetischen Wechselwirkungen zwischen der Befestigungsplatte und dem Testobjekt, vorliegen.

Der Betriebspunkt beschreibt beispielsweise einen Zeitpunkt vor einer Kollision des Testkörpers mit dem Testobjekt. Ferner kann der Betriebspunkt einen Abstand oder relative Geschwindigkeiten zwischen dem Testkörper und dem Testobjekt beschreiben.

Damit wird erreicht, dass das Testobjekt, die Befestigungsplatte und das Koppelelement des Koppelmechanismus aufgrund der Kollision zwischen dem Testkörper und dem Testobjekt keinen Schaden davontragen, da das Testobjekt von der Befestigungsplatte bei der Kollision entkoppelt ist.

Darüber hinaus wird eine realitätsnahe Kollision zwischen dem Kollisionskörper und dem Testobjekt nachgestellt.

Bei einem Aufprallunfall, d.h. bei einer Kollision zwischen einem Fahrzeug als Kollisionskörper und einer Person, ist die Person in der Realität von dem Boden entkoppelt. Zwischen den Fußsohlen der Person und dem Boden treten Reibungskräfte auf, welche bei einer Kollision mit dem Fahrzeug wirken. Eine solche Kollision in der Realität kann mit dem erfindungsgemäßen System zum Erzeugen von Kollisionen zwischen einem Kollisionskörper und einem Testobjekt entsprechend nachgebildet werden. Zu dem Betriebspunkt der Kollision entkoppelt der Koppelmechanismus das Testobjekt von der Befestigungsplatte, so dass das Testobjekt mechanisch entkoppelt auf der Befestigungsplatte aufliegt. Somit wirken zwischen dem Testobjekt und der Befestigungsplatte lediglich Reibkräfte zwischen den Kontaktflächen des Testobjekts und der Befestigungsplatte. Damit ist eine realitätsnahe Nachbildung von Kollisionen zwischen einem Kollisionskörper und einem Testobjekt gegeben, die durch genauere Testergebnisse erzielt werden können.

Gemäß einer weiteren beispielhaften Ausführungsform der vorliegenden Erfindung ist der Antriebsriemen ein Zahnriemen und der Antriebskörper weist eine Zahnriemenscheibe auf. Der Zahnriemen ist mit der Zahnriemenscheibe formschlüssig und schlupffrei gekoppelt und kann über ein Anpresselement an die Antriebsrolle angepresst werden. Der flache Antriebsriemen wird um 90° Grad um die Längserstreckungsrichtung aufgestellt bzw. verdrillt, damit der Antriebsriemen das Antriebsrad sozusagen umschlingt.

Ein Zahnriemen wird als Treibriemen mit Zahnung verstanden, welcher formschlüssig in entsprechende Verzahnungen der Zahnriemenscheibe läuft. Auf der Innenseite des Zahnriemens sind Zähne angeordnet, welche in entsprechende Zähne an der Außenseite der Zahnriemenscheibe bzw. der Antriebsrolle eingreifen, oder umgekehrt. Die Zähne des Zahnriemens können beispielsweise aus Gummi, z.B. Neopren, oder Kunststoff, z.B. Polyurethan, ausgeformt sein. Durch die Formschlüssigkeit der Verzahnung zwischen den Zähnen des Zahnriemens und den Zähnen der Zahnriemenscheibe können höhere Kräfte exakter übertragen werden. Zudem wird ein Schlupf zwischen dem Zahnriemen und der Zahnriemenscheibe ausgeschlossen, so dass eine exaktere Steuerung der Bewegung der Befestigungsplatte, welche mit dem Zahnriemen gekoppelt ist, möglich ist. Insbesondere kann mittels des Einsatzes des Zahnriemens als Antriebsriemen die Befestigungsplatte besser hin- und herbewegt werden, um spontane Richtungswechsel des Testobjekts zu simulieren.

Zudem ist die Montage bzw. das Aufstellen des Systems vereinfacht, da der Zahnriemen aufgrund des Formschlusses mit der Zahnriemenscheibe nicht vorgespannt werden muss, sondern ungespannt auf dem Boden aufgelegt werden kann. Somit sind kurze Montagezeiten des Systems möglich, da keine Vorspannschritte durchgeführt werden müssen.

Insbesondere, da der Zahnriemen im Vergleich zu konventionellen Ansätzen nicht vorgespannt werden muss, ist es ausreichend, die Vorrichtungen und Elemente des Systems, wie beispielsweise die Antriebseinheit oder etwaige Umlenkrollen, einfach auf den Boden aufzulegen, ohne diese fix an dem Boden mit Befestigungsmittel zu befestigen. Da keine Vorspannkräfte entlang des Antriebsriemens wirken, reicht die Reibung zwischen der Auflagefläche der jeweiligen Vorrichtungen und dem Boden aus, damit diese nicht bei der Beschleunigung und der Bewegung der Befestigungsplatte verrutschen. Somit entfallen alle Montageschritte, welche zur Befestigung der Vorrichtungen des Systems dem Boden dienen. Somit kann das Aufstellen bzw. die Montage des Systems deutlich beschleunigt werden.

Gemäß einer weiteren beispielhaften Ausführungsform der vorliegenden Erfindung weist die Antriebseinheit ein Anpresselement auf, wobei der Antriebsriemen zwischen dem Antriebskörper und dem Anpresselement geführt ist. Das Anpresselement drückt den Antriebsriemen gegen den Antriebskörper. Somit wird beispielsweise die Reibung zwischen dem Antriebsriemen und dem Antriebskörper sichergestellt, so dass ein Schlupf zwischen dem Antriebsriemen und dem Antriebskörper reduziert bzw. unterbunden wird. Ferner wird in dem Fall, in dem der Antriebsriemen ein Zahnriemen ist, der Formschluss mit der Zahnriemenscheibe sichergestellt, wenn das Anpresselement den Zahnriemen gegen die Zahnriemenscheibe drückt.

Liegt der Antriebsriemen ungespannt auf dem Boden, so kann mittels des Anpresselements sichergestellt werden, dass ein Antriebsmoment des Antriebsrades auf den Antriebsriemen übertragen wird und sich der Antriebsriemen nicht während der Bewegung von dem Antriebskörper löst.

Gemäß einer weiteren beispielhaften Ausführungsform weist das System ferner eine Umlenkrolle auf, welche beabstandet zu der Antriebseinheit auf dem Boden platzierbar ist. Der flache Antriebsriemen wird aufgestellt bzw. verdrillt, ist um die Umlenkrolle und um die Antriebseinheit geführt und bildet beispielsweise eine geschlossene Schlaufe.

Gemäß einer weiteren beispielhaften Ausführungsform weist der Koppelmechanismus einen ersten Magneten, z.B. einen Permanentmagneten, und einen zweiten Magneten, insbesondere einen steuerbaren Elektromagneten auf. Der erste Magnet und der zweite Magnet sind an der Befestigungsplatte angeordnet. Insbesondere können der erste Magnet und der zweite Magnet im Inneren der Befestigungsplatte angeordnet sein und von der Umgebung versiegelt werden.

Der erste Magnet ist derart an der Befestigungsplatte angeordnet, dass eine magnetische Haltekraft erzeugbar ist, welche im Zusammenwirken mit einem dritten Magneten, insbesondere einer magnetisierbaren Platte, an dem Testobjekt das Testobjekt an die Befestigungsplatte koppelt.

Der zweite Magnet ist derart an der Befestigungsplatte angeordnet, dass eine magnetische Abstoßkraft erzeugbar ist, welche entgegen der Haltekraft wirkt und bei Überschreiten eines vorbestimmten Betrags der Abstoßkraft das Testobjekt von der Befestigungsplatte entkoppelt.

Die Haltekraft und die Abstoßkraft treten in Wechselwirkung mit dem dritten Magneten bzw. der magnetisierbaren Patte an dem Testobjekt. Das Testobjekt kann beispielsweise Metallbestandteile, Permanentmagnete oder Elektromagnete aufweisen.

Mittels des ersten Magneten, insbesondere mittels der Permanentmagneten, kann das Testobjekt in einfacher Art und Weise an die Befestigungsplatte gekoppelt werden. Vor der Kollision mit dem Kollisionskörper wird das Testobjekt entkoppelt, indem der zweite Magnet angesteuert und die Abstoßkraft erzeugt, welche gegen die magnetische Haltekraft wirkt.

Beispielsweise heben sich die magnetische Haltekraft und die magnetische Abstoßkraft auf, so dass das Testobjekt von der Befestigungsplatte entkoppelt ist. Ferner kann die magnetische Abstoßkraft etwas größer als die magnetische Haltekraft sein, so dass zudem die Abstoßkraft gegen die Gewichtskraft des Testobjekts wirkt. Somit kann das Testobjekt in einem schwebenden und reibungsfreien Zustand auf der Befestigungsplatte aufliegen. Somit können gewünschte Kollisionsbedingungen zwischen dem Kollisionskörper und dem Testobjekt gezielt eingestellt werden.

Alternativ kann die magnetische Haltekraft höher als die magnetische Abstoßkraft sein, wodurch dennoch in diesem Zusammenhang das Testobjekt als (mechanisch) entkoppelt von der Befestigungsplatte gilt. Wird die magnetische Haltekraft beispielsweise leicht höher als die magnetische Abstoßkraft gewählt, kann beispielsweise eine erhöhte Reibungskraft zwischen dem Testobjekt und der Befestigungsplatte simuliert und gezielt nachgestellt werden.

Gemäß einer weiteren beispielhaften Ausführungsform weist das System ferner eine Sensoreinrichtung auf, welche die Position des Kollisionskörpers relativ zu dem Testobjekt misst. Zudem weist das System eine Steuereinheit auf, welche zum Austausch von Signalen und Daten mit der Sensoreinrichtung einerseits und mit dem Koppelmechanismus andererseits derart verbunden ist, dass die Steuereinheit in Abhängigkeit von der gemessenen Position und Geschwindigkeit des Kollisionskörpers den Koppelmechanismus steuert.

Die Sensoreinrichtung kann beispielsweise am Boden aufliegende Druckplatten aufweisen, über welche der Kollisionskörper fahren kann. Ferner kann die Sensoreinrichtung Lichtschrankensensoren aufweisen, welche ein Durchfahren des Kollisionskörpers messen. Desweiteren kann die Sensoreinrichtung ein Differential GPS sein, welches Informationen zu Abstand und Geschwindigkeit zwischen Kollisionskörper und Testobjekt an die Steuereinheit übergibt.

Detektiert die Sensoreinrichtung das Passieren des Kollisionskörpers, kann die Steuereinheit entsprechend den Koppelmechanismus steuern und das Testobjekt von der Befestigungsplatte entkoppeln und lösen. Mittels der Sensoreinrichtung kann in einem sehr kurzen Zeitraum vor der Kollision zwischen dem Kollisionskörper und dem Testobjekt das Testobjekt von der Befestigungsplatte entkoppelt werden. Somit kann die Befestigungsplatte bis kurz vor der Kollision mit dem Kollisionskörper auf der Befestigungsplatte gekoppelt sein, so dass störende Einflüsse, wie beispielsweise Windböen, oder andere Umgebungseinflüsse, das Testobjekt vor der Kollision negativ beeinflussen und beispielsweise umstoßen.

Gemäß einer weiteren beispielhaften Ausführungsform ist die Steuereinheit ferner mit der Antriebseinheit zum Austausch von Signalen und Daten derart verbunden, dass die Steuereinheit in Abhängigkeit von der gemessenen Position des Kollisionskörpers die Antriebseinheit steuert. Mittels der exakten Steuerung der Antriebseinheit kann exakt die Beschleunigung und die Geschwindigkeit der Befestigungsplatte und entsprechend des Testobjekts zu einem gewissen Betriebspunkt eingestellt werden. Dadurch können sich gezielt gewünschte Kollisionen bzw. kollisionsnahe Situationen zwischen dem Kollisionskörper und dem Testobjekt einstellen. Dies kann insbesondere vorteilhaft bei Tests von Fahrassistenzsystemen dienlich sein.

Zur Übertragung der Signale können drahtlose Übertragungstechniken, wie beispielsweise Bluetooth-, Wireless LAN-, NFC (Near Field Communication)-Techniken eingesetzt werden. Die Steuereinheit, die Sensoreinrichtung, das Testobjekt und/oder die Befestigungsplatte weisen entsprechend Sende- und/oder Empfangseinheiten auf, um eine drahtlose Datenübertragung zu ermöglichen.

Gemäß einer weiteren beispielhaften Ausführungsform weist das System eine Datenbank auf, auf welcher Daten von vorbestimmten Bewegungsabläufen des Testobjekts entlang des Bodens abgespeichert sind. Die Datenbankeinheit ist mit der Steuereinheit zum Austausch der Daten derart verbunden, dass die Steuereinheit die Antriebseinheit basierend auf den Daten steuert. Die Bewegungsabläufe des Testobjekts können beispielsweise ein konstantes Laufen bzw. ein konstantes Rennen einer Person nachbilden. Zudem können Bewegungsabläufe nachgestellt werden, welche eine Person simulieren, die abrupt stehen bleibt, abrupt los läuft oder abrupte Richtungswechsel durchführt. Somit können realitätsnahe Verkehrssituationen zwischen einer Person als Testobjekt und einem Kollisionskörper nachgestellt werden.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben.
Fig. 1 zeigt eine schematische Darstellung eines Systems zum Erzeugen von Kollisionen zwischen einem Kollisionskörper und einem Testobjekt gemäß einer beispielhaften Ausführungsform der vorliegenden Erfindung;
Fig. 2 zeigt eine schematische Darstellung eines Testobjekts auf einer Befestigungsplatte, welche einen magnetischen Koppelmechanismus aufweist gemäß einer beispielhaften Ausführungsform der vorliegenden Erfindung;
Fig. 3 zeigt eine schematische Darstellung eines Systems zum Erzeugen von Kollisionen zwischen einem Kollisionskörper und einem Testobjekt, wobei der Antriebsriemen als Zahnriemen gemäß einer beispielhaften Ausführungsform der vorliegenden Erfindung ausgebildet ist;
Fig. 4 zeigt eine schematische Darstellung verschiedener Bewegungsabläufe des Testkörpers;
Fig. 5 zeigt eine schematische Darstellung einer Steuereinheit gemäß einer beispielhaften Ausführungsform der vorliegenden Erfindung;
Fig. 6 zeigt eine schematische Darstellung einer Befestigungsplatte gemäß einer beispielhaften Ausführungsform der vorliegenden Erfindung;
Fig. 7 zeigt eine perspektivische Darstellung eines Systems zum Erzeugen von Kollisionen oder kollisionsnahen Situationen zwischen einem Kollisionskörper 102 und einem Testobjekt gemäß einer beispielhaften Ausführungsform der vorliegenden Erfindung;
Fig. 8 zeigt eine schematische Darstellung eines Anpresselements mit Anpressrollen gemäß einer beispielhaften Ausführungsform der vorliegenden Erfindung; und
Fig. 9 zeigt eine schematische Darstellung eines Anpresselements mit einem Anpressriemen gemäß einer beispielhaften Ausführungsform der vorliegenden Erfindung.

### Detaillierte Beschreibung von exemplarischen Ausführungsformen

Gleiche oder ähnliche Komponenten in den Figuren sind mit gleichen Bezugsziffern versehen. Die Darstellungen in den Figuren sind schematisch.

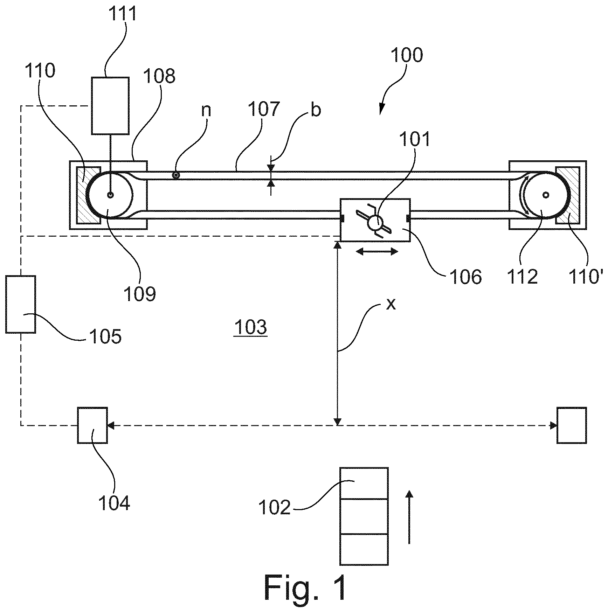

**Fig. 1** zeigt ein System 100 zum Erzeugen von Kollisionen zwischen einem Kollisionskörper 102, z.B. einem Fahrzeug, und einem Testobjekt 101. Das System 100 weist eine Befestigungsplatte 106, einen Antriebsriemen 107 und eine Antriebseinheit 108 auf. Die Befestigungsplatte 106 weist einen Koppelmechanismus auf, mittels welchem das Testobjekt 101 lösbar auf der Befestigungsplatte 106 koppelbar ist. Der Antriebsriemen 107 ist an der Befestigungsplatte 106 befestigt und wird mittels der Antriebseinheit 108 angetrieben. Die Antriebseinheit 108, der Antriebsriemen 107 und die Befestigungsplatte 106 sind auf dem Boden 103 derart platzierbar, dass die Antriebseinheit 108 den Antriebsriemen 107 und die Befestigungsplatte 106 entlang dem Boden 103 bewegt.

Der Koppelmechanismus ist derart steuerbar, dass das Testobjekt 101 an der Befestigungsplatte 106 gekoppelt ist und ab einem vorbestimmten Betriebspunkt vor einer Kollision zwischen dem Kollisionskörper 102 und dem Testobjekt 101 von der Befestigungsplatte 106 entkoppelt ist, so dass bei der Kollision, d.h. zum Zeitpunkt der Kollision, zwischen dem Kollisionskörper 102 und dem Testobjekt 101 das Testobjekt 101 mechanisch entkoppelt von der Befestigungsplatte 106 ist.

Während eines Testdurchlaufs mittels des in Fig. 1 dargestellten Systems 100 fährt der Kollisionskörper 102 in Richtung der Befestigungsplatte 106 mit einer ersten Geschwindigkeit. Die Befestigungsplatte 106 wird über den Antriebsriemen 107 mittels der Antriebseinheit 108 ebenfalls bewegt und bewegt sich mit einer zweiten Geschwindigkeit. Die Befestigungsplatte 106 bewegt sich dabei in einer beispielsweise orthogonalen Richtung bezüglich der Bewegungsrichtung des Kollisionskörpers 102. Alternativ kann ein beliebiger Winkel zwischen der Bewegungsrichtung der Befestigungsplatte 106 und dem Kollisionskörper 102 eingestellt werden.

Der Koppelmechanismus ist derart ausgebildet, dass das Testobjekt 101 kurz vor einer Kollision des Testobjekts mit dem Kollisionskörper 102 das Testobjekt 101 von der Befestigungsplatte 106 entkoppelt wird. Dadurch wird bei der Kollision zwischen dem Testobjekt 101 und dem Kollisionskörper 102 das Testobjekt 101 nicht fest an die Befestigungsplatte mechanisch gekoppelt. Dies hat den Vorteil, dass kein Bauteil des Koppelmechanismus mit dem Testobjekt 101 bei der Kollision gekoppelt ist, so dass das Risiko eines Defekts dieser Bauteile des Koppelmechanismus durch die Kollision verringert wird. Darüber hinaus wird eine realitätsnahe Kollision simuliert, da das Testobjekt 101 von der Befestigungsplatte 106 bzw. dem Koppelmechanismus mechanisch entkoppelt ist und beispielsweise lediglich auf der Befestigungsplatte 106 aufliegt. Dadurch wird lediglich die Gewichtskraft des Testobjekts 101 auf die Befestigungsplatte 106 und eine natürliche Reibung zwischen den Auflageflächen des Testobjekts 101 und der Befestigungsplatte 106 simuliert. Somit wird eine realitätsnahe Situation nachgestellt, bei welcher beispielsweise eine Person als Testobjekt 101 mit seinen Füßen (Gummisohlen eines Schuhs) auf einem Asphalt aufliegt. Da erst kurz vor der Kollision, beispielsweise in einem Zeitraum zwischen 0,1 ms und 2 s, die Befestigungsplatte 106 von dem Testobjekt 101 entkoppelt wird, kann bis zu diesem Betriebspunkt vor der Kollision die Befestigungsplatte 106 schnelle Richtungswechsel durchführen und beliebige Beschleunigungen ausführen, ohne dass sich das Testobjekt 101 von der Befestigungsplatte 106 löst. Dadurch kann beispielsweise ein Fahrassistenzsystem in dem Kollisionskörper 102 getestet werden.

Der Antriebsriemen 107 verläuft zwischen der Befestigungsplatte 106 und einem Antriebskörper 109 der Antriebseinheit 108. Die Antriebseinheit 108 kann ferner ein Anpresselement 110 aufweisen, so dass zwischen dem Anpresselement 110 und dem Antriebskörper 109 der Antriebsriemen 107 geführt wird. Somit wird der Antriebsriemen 107 gegen den Antriebskörper 109 mittels des Anpresselements 110 gedrückt, so dass ein Antriebsmoment und/oder Reibschluss von dem Antriebskörper 109 auf den Antriebsriemen 107 übertragen werden kann.

Wie in Fig. 1 dargestellt, kann der Antriebsriemen 107 eine geschlossene Schlaufe bilden. Der Antriebsriemen 107 verläuft dann einerseits um den Antriebskörper 109 und andererseits um eine Umlenkrolle 112. An der Umlenkrolle 112 kann ebenfalls ein Anpresselement 110' angeordnet sein, um den Antriebsriemen 107 an die Umlenkrolle 112 zu pressen. Die Befestigungsplatte 106 ist an einen Bereich des Antriebsriemens 107 zwischen dem Antriebskörper 109 und der Umlenkrolle 112 befestigt. Der Antriebskörper 109 wird beispielsweise mittels eines Motors 111 angetrieben, wobei der Motor 111 beispielsweise ein Elektromotor oder ein Verbrennungsmotor ist.

Der Antriebsriemen 107 ist fest und unlösbar an der Befestigungsplatte 106 befestigt. Der Antriebsriemen 107 liegt lose mit einer Auflagefläche auf dem Boden 103 auf, ohne dass der Antriebsriemen 107 vorgespannt werden muss. Die Breite b der Auflagefläche ist um ein Vielfaches größer, z.B. mindestens fünf Mal so groß, als die Randfläche, d.h. die Höhe bzw. die Dicke, des Antriebsriemens 107. Der Antriebsriemen 107 ist aufgrund der geringen Höhe um die Längsrichtung des Antriebsreimens biegeweich bzw. verdrillbar. Beispielsweise liegt die Auflagefläche in einem Auflagebereich flach auf dem Boden 103 auf und an einem Umlenkbereich der Auflagenfläche, z.B. an dem Antriebskörper 109, ist die Auflagefläche um ca. 90° um die Längsrichtung verdrillt. Der Antriebsriemen 107 ist ferner aufgrund der großen Breite b gegenüber einer Verbiegung um eine Normale n der Auflagefläche biegesteif, um eine bessere Führung der Befestigungsplatte 106 entlang der Bewegungsrichtung bzw. Längserstreckungsrichtung (siehe Doppelpfeil) zu erzeugen.

Der Koppelmechanismus kann beispielsweise manuell gesteuert werden, so dass manuell die Steuereinheit 105 betätigt wird und die Befestigungsplatte 106 von dem Testobjekt 101 gelöst werden kann.

Zudem kann das System 100 ferner eine Sensoreinrichtung 104 aufweisen, welche die Position des Kollisionskörpers 102 relativ zu dem Testobjekt 101 misst. Die Sensoreinrichtung 104 kann beispielsweise als Druckplatte ausgebildet sein, welche bei Überfahren des Kollisionskörpers 102 ein entsprechendes Signal ausgibt. In Fig. 1 ist die Sensoreinrichtung 104 beispielsweise als Lichtsensor bzw. Lichtschranke ausgebildet. Die Lichtschranke misst das Passieren des Kollisionskörpers 102. Ferner kann die Sensoreinrichtung 104 zusätzlich die Geschwindigkeit des Kollisionskörpers 102 messen. Die Sensoreinrichtung 104 gibt die gemessenen Signale an die Steuereinheit 105 ab. Die Steuereinheit 105 ist zudem mit dem Koppelmechanismus derart verbunden, dass die Steuereinheit 105 in Abhängigkeit von der gemessenen Position des Kollisionskörpers 102 den Koppelmechanismus steuert. Beispielsweise kann die Steuereinheit 105 von der Sensoreinrichtung 104 den Betriebspunkt bzw. den Zeitpunkt und die Geschwindigkeit des Testkörpers 102 erhalten. Ferner kennt die Steuereinheit 105 beispielsweise den Abstand x zwischen dem Kollisionskörper 102 und der Befestigungseinrichtung 106. Aus diesen gemessenen Daten kann ein Zeitpunkt berechnet werden, zu welchem eine Kollision zwischen dem Kollisionskörper 102 und dem Testobjekt 101 auf der Befestigungsplatte 106 eintritt. Die Steuereinheit 105 kann basierend auf diesem gemessenen Kollisionszeitpunkt den Entkoppelzeitpunkt, zu welchem das Testobjekt 101 von der Befestigungsplatte 106 entkoppelt wird, berechnen und entsprechend zu diesem Zeitpunkt den Koppelmechanismus steuern.

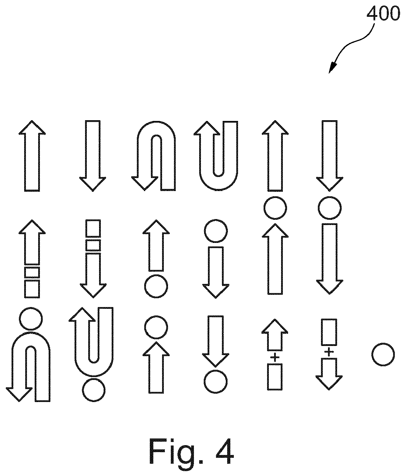

Zudem kann die Steuereinheit 105 mit der Antriebseinheit 108 zum Austausch von Signalen und Daten verbunden sein. Somit kann die Steuereinheit 105 beispielsweise bestimmte Bewegungsabläufe des Testobjekts 101 bzw. der Befestigungsplatte 106 vorgeben (siehe Fig. 4). Durch Steuerung der Geschwindigkeit der Befestigungsplatte 106, insbesondere relativ zu dem Kollisionskörper 102, kann gezielt eine Kollision zwischen dem Kollisionskörper 102 und dem Testobjekt 101 generiert werden oder auch lediglich eine kollisionsnahe Situation zwischen dem Testobjekt 101 und dem Kollisionskörper 102 simuliert werden. Bei einer kollisionsnahen Situation zwischen dem Testobjekt 101 und dem Kollisionskörper 102 kann eine Situation simuliert werden, in welcher der Kollisionskörper 102 das Testobjekt 101 in Bewegungsrichtung des Testobjekts 101 vor dem Testobjekt 101 oder nach dem Testobjekt 101 passiert.

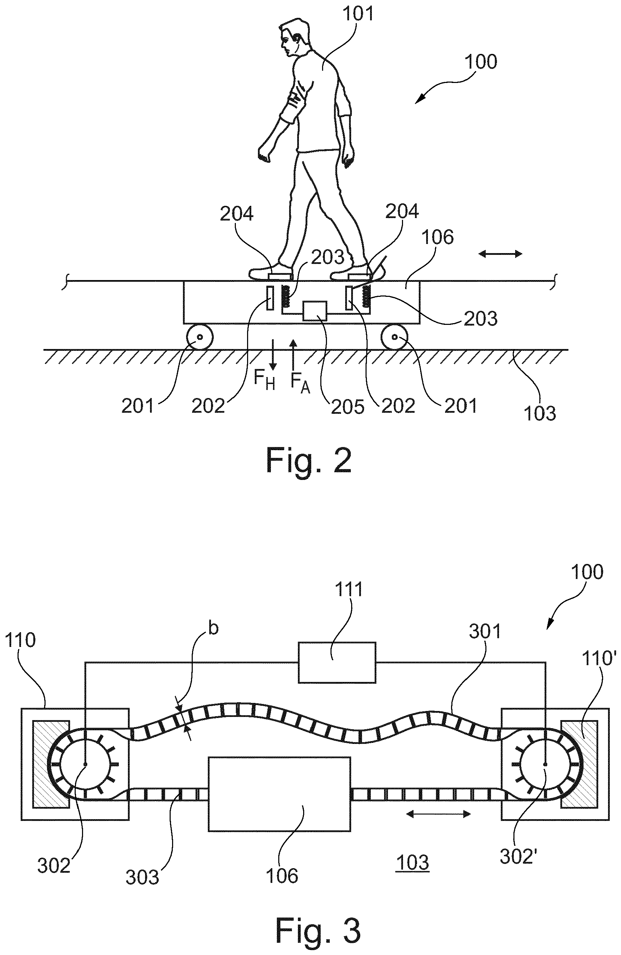

**Fig. 2** zeigt detaillierter die Befestigungsplatte 106 und das Testobjekt 101. Der Koppelmechanismus der Befestigungsplatte 106 weist beispielsweise einen ersten Magneten, wie beispielsweise einen Permanentmagneten 202 auf, und einen steuerbaren zweiten Magneten, wie z.B. einen Elektromagneten 203, auf. Das Testobjekt 101 weist entsprechend eine Magneteinrichtung 204 bzw. eine magnetisierbare Platte (z.B. als dritter Magnet) auf. Die Magneteinrichtung 204 kann ein metallisches bzw. magnetisches Material oder ebenfalls Permanentmagneten oder Elektromagneten aufweisen, so dass die Magnetkräfte des Permanentmagneten 202 und des Elektromagneten 203 in Wechselwirkung mit der Magneteinrichtung 204 treten können. Mit anderen Worten kann mittels des Permanentmagneten 202 das Testobjekt 101 über Magnetkräfte, bzw. über die generierte magnetische Haltekraft FH an der Befestigungsplatte 106 gekoppelt werden.

Die Befestigungsplatte 106 kann zum Betrieb der Elektromagneten 203 einen Energiespeicher 205 aufweisen. Zudem kann entsprechend eine Sende- und/oder Empfangseinrichtung und eine entsprechende Steuereinheit in die Befestigungsplatte 106 integriert werden.

Im gekoppelten Zustand des Testobjekts 101 an der Befestigungsplatte 106 sind die Elektromagneten 203 deaktiviert, so dass die magnetische Haltekraft FH der Permanentmagneten 202 das Testobjekt 101 an die Befestigungsplatte 106 koppeln. Kurz vor der Kollision können die Elektromagneten 203 aktiviert werden, so dass eine magnetische Abstoßkraft FA erzeugt wird, welche im Wesentlichen der magnetischen Haltekraft FH entgegen wirkt. Die magnetische Abstoßkraft FA ist dabei derart groß gewählt, dass die magnetische Haltekraft FH nahezu vollständig bzw. vollständig neutralisiert wird und das Testobjekt 101 von der Befestigungsplatte 106 entkoppelt ist. Unter einem entkoppelten Zustand des Testobjekts 101 von der Befestigungsplatte 106 kann auch verstanden werden, wenn die magnetische Abstoßkraft FA geringfügig größer als die Haltekraft FH oder geringfügig kleiner als die Haltekraft FH ist. In dem Fall, dass die magnetische Abstoßkraft FA kleiner als die magnetische Haltekraft FH ist, wird das Testobjekt 101 mit einer geringeren magnetischen Haltekraft FH an der Befestigungsplatte 106 gehalten. Damit kann beispielsweise eine höhere Reibwirkung zwischen den Auflageflächen des Testobjekts 101 und dem Befestigungselement 106 simuliert werden. In dem Fall, dass die magnetische Abstoßkraft FA größer als die magnetische Haltekraft FH ist, kann die auf die Befestigungsplatte 106 wirkende Gewichtskraft des Testobjekts 101 reduziert werden, so dass eine reduzierte Haftreibung zwischen den Auflageflächen des Testobjekts 101 und der Befestigungsplatte 106 simuliert werden kann. Der Testkörper 101 kann beispielsweise bei einer ausreichend großen magnetischen Abstoßkraft FA in einem schwebenden Zustand über der Befestigungsplatte 106 positioniert werden.

Die Befestigungsplatte 106 kann beispielsweise über den Boden 103 mit einer Auflagefläche aufliegen oder, wie in Fig. 2 dargestellt, mittels Rollen 201 versehen werden, so dass die Befestigungsplatte 106 entlang dem Boden 103 rollt.

**Fig. 3** zeigt eine weitere beispielhafte Ausführungsform des Systems 100, wobei der Antriebsriemen 107 als Zahnriemen 301 ausgebildet ist und die Antriebseinheit 108 eine Zahnriemenscheibe 302 aufweist. Der Zahnriemen 301 weist eine Vielzahl von Zähnen 303 auf, welche formschlüssig in die gezahnte Zahnriemenscheibe 302 eingreifen und somit einen formschlüssigen Kontakt bzw. eine formschlüssige Kopplung zwischen dem Zahnriemen 301 und der Zahnriemenscheibe 302 hergestellt werden. Durch den formschlüssigen Kontakt der Zähne 303 des Zahnriemens 301 und der Zahnriemenscheibe 302 ist ein schlupffreier Antrieb möglich. Der Zahnriemen 301 kann als geschlossene Schlaufe ausgebildet sein und um eine Zahnriemenscheibe 302 oder zusätzlich um eine weitere beabstandete Zahnriemenscheibe 302' verlaufen und jeweils einen formschlüssigen Kontakt mit den entsprechenden Zahnriemenscheiben 302, 302' bilden. Zusätzlich können entsprechende Anpresselemente 110, 110' an den entsprechenden Zahnriemenscheiben 302, 302' ausgebildet werden, um zusätzlich den Zahnriemen 301 gegen die entsprechende Zahnriemenscheibe 302, 302' zu drücken. Der Zahnriemen 301 ist aufgrund der geringen Höhe um die Längsrichtung des Antriebsreimens 107 bzw. des Zahnriemens 301 biegeweich bzw. verdrillbar. Die Auflagefläche liegt in einem Auflagebereich flach auf dem Boden 103 auf und an einem Umlenkbereich der Auflagenfläche, z.B. an den Zahnriemenscheiben 302, 302', ist die Auflagefläche um ca. 90° um die Längsrichtung verdrillt. Der Antriebsriemen 107 ist ferner aufgrund der großen Breite b um eine Normale n der Auflagefläche biegesteif, um eine bessere Führung der Befestigungsplatte 106 entlang der Bewegungsrichtung bzw. Längsrichtung (siehe Doppelpfeil) zu erzeugen. Die Zähne 303 können in dem Auflagenbereich in Richtung Boden 103 zeigen oder, wie in Fig. 3 dargestellt, weg vom Boden 103 zeigen.

Durch Ausbildung des Antriebsriemens 107 als Zahnriemen 301 und durch Einsatz von Zahnriemenscheiben 302 wird ein Zahnriemenantrieb geschaffen. Dadurch kann ein schneller Richtungswechsel der Befestigungsplatte 106 ermöglicht werden, so dass verschiedenste Bewegungsabläufe des Testobjekts 101 simuliert werden können (siehe Fig. 4). Außerdem kann der Zahnriemen 301 ungespannt auf dem Boden 103 aufliegen, ohne dass der Zahnriemen 301 zwischen den Zahnriemenscheiben 302, 302' vorgespannt werden muss. Dies erleichtert die Installation des Systems 100. Da zudem keine Vorspannkräfte aufgrund der fehlenden Vorspannung des Zahnriemens 301 und auf die Antriebseinheit 108 und/oder die Umlenkrollen 112 wirken, kann die Antriebseinheit 108 und die Umlenkrolle 112 einfach auf dem Boden 103 aufgelegt werden. Befestigungselemente zum Befestigen der Antriebseinheit 108 oder der Umlenkrolle 112 auf dem Boden 103 sind nicht notwendig. Die Haftreibung zwischen dem Boden 108 und der Auflageflächen der Antriebseinheit 108 und/oder der Umlenkrollen 112 genügt, um den Zahnriemen 301 wie gewünscht anzutreiben.

In **Fig. 4** sind eine Vielzahl verschiedener Bewegungsabläufe 400 dargestellt. Mittels des vorliegenden Systems können diese verschiedenen Bewegungsabläufe 400 für das Testobjekt 101 nachgebildet werden. Beispielsweise kann das Testobjekt 101 bzw. die Befestigungsplatte 106 kontinuierlich entlang einer Richtung bewegt werden oder diskontinuierlich, d.h. mit Unterbrechungen und sich ändernden Geschwindigkeiten entlang einer Bewegungsrichtung fortbewegt werden. Mit den Pfeilen wird in Fig. 4 eine Bewegungsrichtung dargestellt. Die Pfeile weisen beispielhaft zusätzlich Unterbrechungen auf, welche durch einen Kreis dargestellt sind. Kleinere Unterbrechungen in einem Pfeil zeigen beispielsweise eine stockende bzw. diskontinuierliche Bewegung, welche entsprechend nachgebildet werden kann.

Die verschiedenen Bewegungsabläufe 400 werden beispielsweise in einer Datenbankeinrichtung abgespeichert und können von der Steuereinheit 105 gezielt abgerufen werden.

**Fig. 5** zeigt eine Steuereinheit 105, welche durch einen Benutzer bedient werden kann. Die Steuereinheit 105 kann beispielsweise ein portabler Computer, wie beispielsweise ein Notebook oder ein Tablet-PC, wie in Fig. 5 gezeigt, darstellen. Ferner ist die Datenbankeinheit in der Steuereinheit 105 eingerichtet. Der Benutzer kann beispielsweise eine Geschwindigkeit des Testobjekts 101 und/oder des Testkörpers 102 vorgeben. Ferner kann ein Automatikmodus gewählt werden, sodass bestimmte vorgegebene Bewegungsabläufe 400 ausgeführt werden. Die Steuereinheit 105 steuert entsprechend die Antriebseinheit 108 und/oder die Geschwindigkeit des Testkörpers 102.

**Fig. 6** zeigt eine beispielhafte Ausführungsform der Befestigungsplatte 106. Die Befestigungsplatte 106 weist beispielsweise eine umlaufende und abgeflachte Phase 602 auf, sodass der Testkörper 102 nach einer Kollision einfacher über die Befestigungsplatte 106 fahren kann. An gegenüberliegenden Stellen der Befestigungsplatte 106 sind Befestigungselemente 601 vorgesehen, an welchen der Antriebsriemen befestigbar ist. Auf einer Oberfläche der Befestigungsplatte 106 sind die Permanentmagneten 202 und die Elektromagneten 203 dargestellt. Ein Schalter 603 ist vorgesehen, um manuell die Elektromagnete 203 zu aktivieren oder zu deaktivieren. Ferner weist die Befestigungsplatte 106 beispielsweise Ladeanschlüsse 604 auf, an welchen ein Ladegerät bzw. Netzstecker anschließbar ist, um eine in der Befestigungsplatte 106 integrierte Batterie zur Stromversorgung aufzuladen. Über eine Schnittstelle 605 kann eine in der Befestigungsplatte 106 integrierte Steuereinheit mittels welcher z.B. die Elektromagnete oder die Datenübertragung steuerbar ist programmiert und/oder aufgeladen werden.

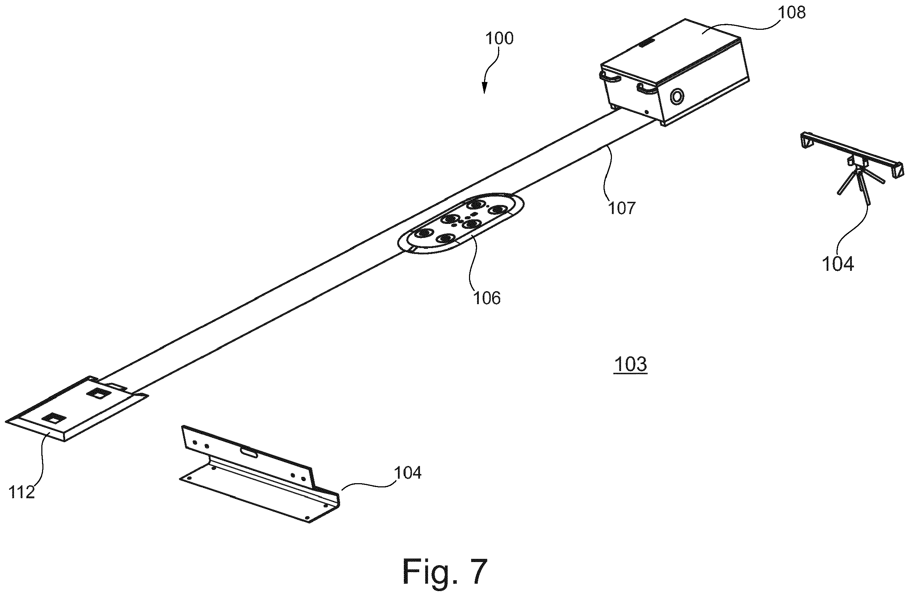

**Fig. 7** zeigt eine perspektivische Darstellung des Systems 100 zum Erzeugen von Kollisionen oder kollisionsnahen Situationen zwischen einem Kollisionskörper 102 und einem Testobjekt 101. Auf dem Boden 103 werden die Antriebseinheit 108, die Befestigungsplatte 106 und die Umlenkrolle 112 platziert. Der Antriebsriemen 107 bildet eine Schlaufe und verläuft zwischen der Antriebseinheit 108 und der Umlenkrolle 112. Ferner wird eine Sensoreinrichtung 104, wie z.B. eine Lichtschrankenanordnung installiert, um ein passieren des Testkörpers 102 zu messen. Die in Fig. 7 dargestellten Elemente 104, 106, 107, 108, 112 können in einfacher Art und Weise auf den Boden aufgelegt werden, ohne dass Befestigungsmittel notwendig sind.

Wie in Fig. 7 angedeutet, kann der Antriebsriemen 107 in einer beispielhaften Ausführungsform (vor-)gespannt auf dem Boden 103 auflegbar sein.

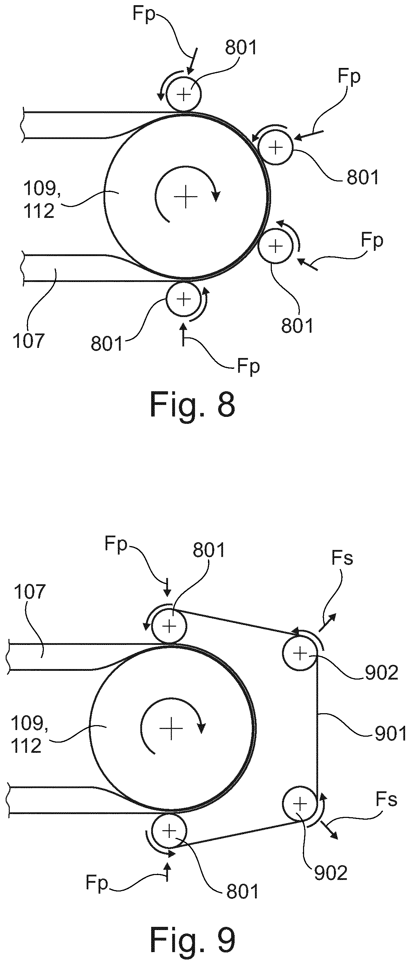

**Fig. 8** zeigt eine beispielhafte Ausführungsform des Anpresselements 110, welches beispielsweise schematisch in Fig. 1 und in Fig. 3 dargestellt ist. Das Anpresselement 110 kann beispielsweise drei, vier oder mehr Anpressrollen 801 aufweisen, welche drehbar gelagert sind. Insbesondere ist jeweils eine Anpressrolle 801 im Ein- oder Auslauf des Antriebsriemens 107 an dem Antriebskörper 109 bzw. der Umlenkrolle 112 angeordnet.

Die Drehachsen der Anpressrollen 801 sind parallel zu der Drehachse des Antriebskörpers 109 (Antriebsrolle) oder entsprechend der Drehachse der Umlenkrolle 112 angeordnet. Die Anpressrollen 801 üben eine Anpresskraft FP auf den Antriebsriemen 107 aus. Die Anpresskraft FP der Anpressrollen 801 wirkt im Wesentlichen in Richtung Drehachse des Antriebskörpers 109 bzw. der Umlenkrolle 112. Somit kann der Antriebsriemen 107 mittels der Anpressrollen 801 gegen den Antriebskörpers 109 bzw. die Umlenkrolle 112 gedrückt werden, so dass ein guter Haftschluss oder Formschluss (falls der Antriebsriemen ein Keilriemen ist) zwischen dem Antriebskörper 109 bzw. der Umlenkrolle 112 und dem Antriebsriemen 107 vorliegt. Da die Anpressrollen 801 parallele Drehachsen bezüglich der Drehachse des Antriebskörpers 109 bzw. der Umlenkrolle 112 aufweisen und sich die Anpressrollen 801 entsprechend mit dem Antriebsriemen 107 mitdrehen, ist die Reibung und somit der Verschleiß zwischen dem Antriebsriemen 107 und den Anpressrollen 801 minimiert.

**Fig. 9** zeigt eine weitere beispielhafte Ausführungsform des Anpresselements 110, welches zumindest zwei Anpressrollen 801 und zusätzlich zwei Spannrollen 902 aufweist. Um die Anpressrollen 801 und die Spannrollen 902 verläuft ein Anpressriemen 901. Der Anpressriemen 901 bildet eine geschlossene Schlaufe aus.

Der Antriebsriemen 107 verläuft zwischen der Oberfläche des Antriebskörpers 109 bzw. der Umlenkrolle 112 und dem Anpressriemen 901. Der Anpressriemen 901 wird mittels der Anpressrollen 801 durch die Anpresskraft FP in Richtung Antriebsriemen 107 und in Richtung der Oberfläche des Antriebskörpers 109 bzw. der Umlenkrolle 112 gepresst. Die Anpresskräfte FP wirken in Richtung der Drehachse des Antriebskörpers 109 bzw. der Umlenkrolle 112.

Die Spannrollen 902 sind beabstandet von dem Antriebsriemen 107 angeordnet und sind eingerichtet, den Anpressriemen 901 zu spannen. Die Spannrollen 902 weisen Drehachsen auf, welche parallel zu der Drehachse des Antriebskörpers 109 bzw. der Umlenkrolle 112 sind. Ferner spannen die Spannrollen 902 den Anpressriemen 901 mit einer Spannrichtung FS vor. Die Spannrichtung FS verläuft von der entsprechenden Spannrolle 902 insbesondere in Gegenrichtung zu der Drehachse des Antriebskörpers 109 bzw. der Umlenkrolle 112. Der Anpressriemen 901 wird somit gespannt. Die Anpressrollen 801 sind insbesondere derart relativ zu dem Antriebskörper 109 bzw. der Umlenkrolle 112 angeordnet, dass sich ein Teil des Anpressriemens 901 um den Antriebsriemen 107 bzw. um die Oberfläche des Antriebskörpers 109 bzw. der Umlenkrolle 112 anschmiegt und eine Flächenkraft erzeugt wird. Die Flächenkraft wirkt als Anpresskraft FP, die den Antriebsriemen 107 an die Oberfläche des Antriebskörpers 109 bzw. der Umlenkrolle 112 drückt. Somit wird der Antriebsriemen 107 nicht nur punktuell im Bereich der Anpressrollen 801 an den Antriebskörper 109 bzw. der Umlenkrolle 112 gepresst, sondern wird mittels des Anpressriemens 901 über die gesamte Kontaktfläche zwischen dem Antriebsriemen 107 und dem Anpressriemen 901 an die Oberfläche des Antriebskörpers 109 bzw. der Umlenkrolle 112 gepresst. Somit wird eine hohe Haftreibung zwischen dem Antriebsriemen 107 und der Oberfläche des Antriebskörpers 109 bzw. der Umlenkrolle 112 geschaffen. Damit wird sichergestellt, dass der Antriebsriemen 107 über einen großen Flächenbereich an der Oberfläche des Antriebskörpers 109 bzw. der Umlenkrolle 112 haftend anliegt, so dass beispielsweise schonend, verlustfrei und schlupffrei ein Antriebsmoment auf den Antriebsriemen 107 übertragbar ist.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

**Bezugszeichenliste:**

| | | | |
|---|---|---|---|
| 100 | System | 601 | Befestigungselement |
| 101 | Testobjekt | 602 | abgeflachte Phase |
| 102 | Kollisionskörper | 603 | Schalter |
| 103 | Boden | 604 | Ladeanschluss |
| 104 | Sensoreinrichtung | 605 | Schnittstelle |
| 105 | Steuereinheit | | |
| 106 | Befestigungsplatte | 801 | Anpressrolle |
| 107 | Antriebsriemen | | |
| 108 | Antriebseinheit | 901 | Anpressriemen |
| 109 | Antriebskörper | 902 | Spannrolle |
| 110 | Anpresselement | | |
| 111 | Motor | FH | Haltekraft |
| 112 | Umlenkrolle | FA | Abstosskraft |
| | | b | Breite des Antriebsriemens |
| 201 | Rolle | n | Normale der Auflagefläche |
| 202 | Permanentmagnet | | |
| 203 | Elektromagnet | FP | Anpresskraft |
| 204 | Magneteinrichtung | FS | Spannkraft |
| 205 | Energiespeicher | | |
| | | | |
| 301 | Zahnriemen | | |
| 302 | Zahnriemenscheibe | | |
| 303 | Zahn | | |
| | | | |
| 400 | Bewegungsabläufe | | |

## Patentansprüche

1. System (100) zum Erzeugen von Kollisionen oder kollisionsnahen Situationen zwischen einem Kollisionskörper (102), insbesondere ein Fahrzeug, und einem Testobjekt (101), wobei das System (100) aufweist
eine Befestigungsplatte (106) mit einem Koppelmechanismus, mittels welchem das Testobjekt (101) lösbar auf der Befestigungsplatte (106) koppelbar ist,
einen Antriebsriemen (107), welcher an der Befestigungsplatte (106) befestigt ist, und
eine Antriebseinheit (108) mit einem Antriebskörper (109) zum Antreiben des Antriebsriemens (107),
wobei die Antriebseinheit (108), der Antriebsriemen (107) und die Befestigungsplatte (106) direkt auf einem Boden (103) derart platzierbar sind, dass der Antriebskörper (109) den Antriebsriemen (107) und die Befestigungsplatte (106) entlang dem Boden (103) bewegt,
wobei der Antriebsriemen (107) eine Auflagefläche zur Auflage auf dem Boden und eine Randfläche aufweist,
wobei eine Breite der Auflagefläche größer als eine Höhe der Randfläche ist, derart, dass der Antriebsriemen (107) um eine Längsrichtung des Antriebsriemens (107) biegeweich und verdrillbar ist und dass der Antriebsriemen (107) biegesteif um eine Normale der Auflagefläche ist.

2. System (100) gemäß Anspruch 1,
wobei der Antriebsriemen (107) ein Zahnriemen (301) ist und der Antriebskörper (109) eine Zahnriemenscheibe (302) ist,
wobei der Zahnriemen (301) mit der Zahnriemenscheibe (302) formschlüssig gekoppelt ist.

3. System (100) gemäß Anspruch 2,
wobei der Antriebsriemen (107) ungespannt auf dem Boden (103) auflegbar ist.

4. System (100) gemäß Anspruch 2,
wobei der Antriebsriemen (107) gespannt auf dem Boden (103) auflegbar ist.

5. System (100) gemäß einem der Ansprüche 1 bis 4,
wobei die Antriebseinheit (108) ein Anpresselement (110) aufweist,
wobei der Antriebsriemen (107) zwischen dem Antriebskörper (109) und dem Anpresselement (110) geführt ist,
wobei das Anpresselement (110) den Antriebsriemen (107) gegen den Antriebskörper (109) drückt.

6. System (100) gemäß einem der Ansprüche 1 bis 5, ferner aufweisend
eine Umlenkrolle (112), welche beabstandet zu der Antriebseinheit (108) auf den Boden (103) platzierbar ist,
wobei der Antriebsriemen (107) um die Umlenkrolle (112) und um die Antriebseinheit (108) geführt ist, um eine geschlossene Schlaufe zu bilden.

7. System (100) gemäß einem der Ansprüche 1 bis 6,
wobei die Befestigungsplatte (106) zumindest eine Rolle (201) aufweist, mittels welcher die Befestigungsplatte (106) entlang dem Boden (103) rollbar ist.

## Claims

1. System (100) for generating collisions or situations close to collisions between a collision body (102), in particular a vehicle, and a test object (101), wherein the system (100) comprises
an attachment plate (106) with a coupling mechanism by which the test object (101) is detachably coupleable on the attachment plate (106),
a driving belt (107) which is attached to the attachment plate (106), and
a driving unit (108) with a driving body (109) for driving the driving belt (107),
wherein the driving unit (108), the driving belt (107) and the attachment plate (106) are directly placeable on a ground (103), such that the driving body (109) is moving the driving belt (107) and the attachment plate (106) along the ground (103),
wherein the driving belt (107) comprises a bearing surface for bearing on the ground and an edge surface,
wherein a width of the bearing surface is larger than a height of the edge surface, such that the driving belt (107) is flexible and twistable around a longitudinal direction of the driving belt (107), and such that the driving belt (107) is rigid around a normal of the bearing surface.

2. System (100) according to claim 1,
wherein the driving belt (107) is a toothed belt (301) and the driving body (109) is a toothed belt disk (302),
wherein the toothed belt (301) is form-fittingly coupled with the toothed belt disk (302).

3. System (100) according to claim 2,
wherein the driving belt (107) is bearable on the ground (103) in a non-tensioned manner.

4. System (100) according to claim 2,
wherein the driving belt (107) is bearable on the ground (103) in a tensioned manner.

5. System (100) according to one of the claims 1 to 4,
wherein the driving unit (108) comprises a pressing element (110),
wherein the driving belt (107) is guided between the driving body (109) and the pressing element (110),
wherein the pressing element (110) is pushing the driving belt (107) against the driving body (109).

6. System (100) according to one of the claims 1 to 5, further comprising
a deflection pulley (112) which is placeable on the ground (103) spaced apart from the driving unit (108),
wherein the driving belt (107) is guided around the deflection pulley (112) and around the driving unit (108) in order to form a closed loop.

7. System (100) according to one of the claims 1 to 6,
wherein the attachment plate (106) comprises at least one roller (201) by which the attachment plate (106) is rollable along the ground (103).

## Revendications

1. Système (100) de génération de collisions ou de situations proches de collisions entre un corps de collision (102), en particulier un véhicule, et un objet de test (101), **caractérisé en ce que** le système (100) présente
une plaque de fixation (106) avec un mécanisme de couplage, au moyen duquel l'objet de test (101) peut être couplé de manière amovible sur la plaque de fixation (106),
une courroie d'entraînement (107), laquelle est fixée au niveau de la plaque de fixation (106), et
une unité d'entraînement (108) avec un corps d'entraînement (109) pour entraîner la courroie d'entraînement (107),
dans lequel l'unité d'entraînement (108), la courroie d'entraînement (107) et la plaque de fixation (106) peuvent être placées directement sur un sol (103) de telle manière que le corps d'entraînement (109) déplace la courroie d'entraînement (107) et la plaque de fixation (106) le long du sol (103),
dans lequel la courroie d'entraînement (107) présente une surface d'appui pour venir en appui sur le sol et une surface de bord,
dans lequel une largeur de la surface d'appui est supérieure à une hauteur de la surface de bord de telle manière que la courroie d'entraînement (107) est souple et peut être vrillée autour d'une direction longitudinale de la courroie d'entraînement (107), et que la courroie d'entraînement (107) est souple autour d'une normale de la surface d'appui.

2. Système (100) selon la revendication 1,
**caractérisé en ce que** la courroie d'entraînement (107) est une courroie dentée (301) et le corps d'entraînement (109) est une poulie de courroie dentée (302),
dans lequel la courroie dentée (301) est couplée par complémentarité de forme à la poulie de courroie dentée (302).

3. Système (100) selon la revendication 2,
**caractérisé en ce que** la courroie d'entraînement (107) peut être posée sans être tendue sur le sol (103).

4. Système (100) selon la revendication 2,
**caractérisé en ce que** la courroie d'entraînement (107) peut être placée en étant tendue sur le sol (103).

5. Système (100) selon l'une quelconque des revendications 1 à 4,
**caractérisé en ce que** l'unité d'entraînement (108) présente un élément de compression (110),
dans lequel la courroie d'entraînement (107) est guidée entre le corps d'entraînement (109) et l'élément de compression (110),
dans lequel l'élément de compression (110) presse la courroie d'entraînement (107) contre le corps d'entraînement (109).

6. Système (100) selon l'une quelconque des revendications 1 à 5, présentant en outre
un galet de renvoi (112), lequel peut être placé sur le sol (103) à distance de l'unité d'entraînement (108),
**caractérisé en ce que** la courroie d'entraînement (107) est guidée autour du galet de renvoi (112) et autour de l'unité d'entraînement (108) pour former une boucle fermée.

7. Système (100) selon l'une quelconque des revendications 1 à 6,
**caractérisé en ce que** la plaque de fixation (106) présente au moins un galet (201), au moyen duquel la plaque de fixation (106) peut être roulée le long du sol (103).
